# EUROPEAN PATENT SPECIFICATION

(11) **EP 1 455 543 B1**
(45) Date of publication and mention of the grant of the patent: **05.01.2011**
(21) Application number: 03004371.5
(22) Date of filing: 03.03.2003
(51) Int. Cl.: H04Q 1/14, H01R 13/514

(54) **Assembly of a telecommunications module and at least one protection plug**
Anordnung von Telekommunikationsmodulen mit wenigstens einem Schutzstecker
Dispositif de modules de télécommunication ayant au moins une fiche de protection

(43) Date of publication of application: 08.09.2004
(73) Proprietor: 3M Innovative Properties Company, St. Paul, MN 55133-3427 (US)
(72) Inventor: Otto, Hans-Dieter, 51688 Wipperfürth (DE); Kuruschowitz, Axel, 42781 Haan (DE); Bund, Christine, 42111 Wuppertal (DE); Denter, Friedrich, 44575 Castrop-Rauxel (DE)
(74) Representative: Bergen, Katja

(56) References cited:
- WO-A-01/41272
- WO-A-02/076109
- DE-C- 3 909 783
- US-A- 5 546 267

## Description

### Field of the Invention

The invention relates to an assembly of a telecommunications module and at least one protection plug, as is commonly used in the telecommunication systems.

In telecommunication systems, numerous subscribers are connected with switches, which are operated by the telephone companies, via various distribution means, in order to enable the communication or data transfer to be established between the subscribers. In the distribution means, such as auxiliary or main distribution frames, the wires coming in from the subscribers, outgoing wires, which are connected to the switch, as well as so-called jumper wires are connected with each other via telecommunications modules. In these telecommunication systems, it is necessary to apply over voltage and over current protection means, in order to protect any equipment, which is connected with the wires, which are terminated at the telecommunications module. E.g., a DSLAM, which is connected with the contacts of a telecommunications module provided with a splitter so as to transfer a split signal to the DSLAM, must be protected from over voltage and/or over current. Usually, the protection means used for this purpose, are contained in protection plugs or protection magazines, which contain the necessary protection components.

### Background

WO 01/41272 describes an over voltage protection magazine which is mountable to a telecommunication mounting system. A connection component containing contacts for connecting wires can be integrated with the protection magazine.

EP 0 621 733 B1 describes a protection module which can be connected with a telecommunications module. The protection module comprises two tapping contacts, which are adapted to contact the contacts of the telecommunications module. Furthermore, a grounding contact is provided which can be in the same plane as the tapping contacts. Both the tapping contacts and the grounding contact are connected with a surge arrester in order to protect any equipment which is connected with the module protected by the disclosed protection module, from over voltage.

DE 39 09 783 Al discloses a protection plug, which comprises a printed circuit board carrying contacts, which are adapted to contact the contacts of a telecommunications module.

DE 100 296 49 C2 discloses a telecommunications module, which contains a print circuit board carrying so-called functional elements.

US 5 546 267 discloses an assembly of a telecommunications module and a protection plug containing at least one protection component.

### Summary of the Invention

The invention provides an assembly of a telecommunications module and at least one protection plug, which has improved properties with regard to the handling of the protection components.

As described in claim 1, the assembly of a telecommunications module and at least one protection plug includes, firstly, at least one protection component, which is contained in the protection plug. In addition, also the module itself contains at least one protection component. The assembly is characterized in that the module contains at least one reversible protection component.

In connection with the present invention, a telecommunications module is any type of module, which is adapted for the connection of wires carrying telecommunications or data transfer signals. Usually, the telecommunications module will have several contacts, which are adapted for the connection of the wires. These contacts can for example be configured as insulation displacement contacts (IDC). As an alternative, the contacts can be configured as wire-wrap pins, around which the exposed end of a wire can be wrapped. Furthermore, the telecommunications module of the inventive assembly can have a strip-like configuration with a row of contacts for incoming wires being formed opposite a row of contact connections of outgoing wires. In an alternative design, the telecommunications module of the inventive assembly can have two rows of contacts, which are formed on opposite sides of the module, e.g. a first row can be formed on a front side and a second row can be formed on a rear side. The telecommunications module can be adapted to be mountable to a telecommunications mounting system of any suitable kind, e.g. a telecommunications rack mount. Furthermore, the telecommunications module can be adapted for being provided indoors, e.g. in a central office, in particular a main distribution frame, as well as outdoors. In particular, the telecommunications module can be provided as a drop-wire module.

A protection plug is construed to be a member, which can be mounted to a telecommunications module so as to connect tapping contacts of the protection plug with the contacts of the telecommunications module. The protection plug can be mountable to and electrically connectable with the telecommunications module by being inserted from any side of the telecommunications module. E.g., the protection plug can be inserted from a front as well as a back side. The tapping contacts can be configured so as to tap the voltage, which is present at the contacts of the module. By means of a connection of the tapping contacts of the protection plug with one or more surge arresters of the protection plug, any over voltage will be detected and will be connected with ground by means of one or more grounding contacts of the protection plug. By means of this structure, the over voltage will not be present at the "other" side of the telecommunications module so that any equipment which is connected with that side, will be protected from over voltage and over current. Furthermore, the protection components of the protection plug and/or the telecommunications module can be configured as over current and surge current protectors. This essentially means that there are components which are activated by over current flowing through the mentioned component which will then change into a state in which the over current is interrupted so that the electrical surroundings, i.e. any equipment which is connected with the module, is protected from the over current.

In a novel manner, the inventive assembly contains protection components both in the module itself and the protection plug. In this way, primary protection functions can be separated from secondary protection functions. The former can be accommodated in the plug, and the latter can be contained in the module. In particular, there are protection components that must be replaced after they have been activated. In other words, these protection components are irreversible. This is typically the case for primary protection components. As examples, a so-called fail-safe or a fuse can be mentioned. The irreversible protection components can be accommodated in the protection plug. In this way, they are easily accessible in order to facilitate removal thereof.

However, any protection components, which do not need to be replaced, also after they might have been activated, can be accommodated in the module itself. In this way, these reversible protection components are located "remote" from the users' access so that intentional or unintentional manipulation will be prevented. By "reversible" it is meant that it is not intended that the components are destroyed, when they are activated and exhibit their protecting function. Thus, they do not have to be replaced under normal circumstances. However, by locating additional protection components in the protection plug, which is easily assessable, any necessary handling of these protection components can easily performed. Furthermore, there are certain protection components, which are, in the course of regular maintenance, replaced after defined time intervals. Also for this type of replacement, they must be easily accessible, which is ensured by means of the invention by preferably locating protection components, which need replacement, in the protection plug. In summary, the invention enables the accommodation of protection components in two different sections of the assembly consisting of the telecommunications module and the protection plug in order to adjust the position and accessibility of the protection component depending on the handling requirements and similar aspects discussed above.

As mentioned, it is currently found advantageous that the telecommunications module contains at least one reversible protection component. It is further found advantageous if the protection plug contains at least one irreversible protection component. However, it is to be noted that this is in no manner obligatory, and both types of protection components can be arranged both in the module itself, and the protection plug. This also applies to the types of protection components described below.

For example, the telecommunications module of the inventive assembly can contain a secondary protection component and/or the plug can contain one or more primary protection components. For the former component, it is not necessary to replace the component after it has performed its protection function. Rather, this component can continuously remain in the assembly, so that it is well accommodated in the telecommunications module where it is not usually accessible in order to prevent any type of unintended manipulation thereof. E.g., the telecommunications module can comprise one or more diodes, whereas the protection plug can comprise an irreversible fail-safe device and/or a fuse.

In accordance with the above-described principle of the invention, the protection plug can contain protection components, which need to be replaced after they have activated, i.e. after they have performed their protection purpose, e.g. a primary protection component.

In this context, it is conceivable that the telecommunications module contains an over current protection, and/or the protective plug contains an over voltage protector. However, it is to be noted again that any types of protection components can be located both in the module itself and the protection plug.

In order to provide a convenient carrier for the protection components, both the telecommunications module as such and/or the protection plug can contain a printed circuit board. The printed circuit board can carry the protection components and represents a possibility of providing a cost efficient way of providing the necessary electrical connections between the contact and the protection components.

As a preferred embodiment of the invention, the telecommunications module can further contain at least one circuit for splitting a signal, which is transmitted by one or more wires connected to the telecommunications module. In this context reference is made to the WO 02/76109, which describes a terminal block, which is adapted to split a combined signal. In particular, with regard to ADSL-technology, which is known to those skilled in the art, a single line, which leads to the subscriber, carries in different bandwidths both a conventional telephone signal and a data signal. In order to separate or "split" the signals, so-called splitter circuits are used which essentially include suitable filters in order to provide the split signal. The related splitter circuits can be integrated with the telecommunications module. In connection with the present invention, these splitter circuits, in particular a printed circuit board carrying these circuits, can be combined with those protection components, which are accommodated in the telecommunications module.

The assembly can further comprise at least one connection point and/or a circuit for testing and monitoring purposes. In particular, the telecommunications module can have internal connections and/or relays for connecting a test and/or monitoring access with particular contacts of the module.

The protection plug of the inventive assembly can have strip-like tapping contacts, which are adapted to contact the contacts of the telecommunications module. Furthermore, the protection plug can have at least one grounding contact, which is also shaped as a strip and which is preferably lying in the same plane as at least some of the tapping contacts. With such a structure of the contacts of the protection plug, the protection plug of the inventive assembly can be configured both simple and effective. As described in more detail below, this structure of the protection plug offers a number of preferred embodiments having novel features as compared to the prior art. In this context, it is to be noted that the above-described protection plug is considered a novel product, which can be provided with or without a telecommunications module so as to constitute a combined assembly thereof. This is also the case for the embodiments of the protection plug described below which can be considered novel products vis-a-vis the prior art.

The protection plug can have the tapping and/or grounding contacts formed on a printed circuit board. In this case, it is particularly simple to provide tapping and grounding contacts, which are situated in one and the same plane and which effectively provide the necessary electrical connections.

Moreover, the tapping and grounding contacts can be formed on the protection plug in a manner to have an equal spacing between them. It should be mentioned that this enables the grounding contacts to be electrically connected with a contact of the telecommunications module, when the taping contacts are in a position to tap contacts of the telecommunications module, to which wires are connected. In case the grounding contact is electrically connected with a further contact of the telecommunications module, this contact will serve as a grounding contact for ultimately connecting the grounding contact of the protection plug with ground.

Generally, the protection plug, which may or may not be combined with a telecommunications module, can have numerous tapping contacts in order to provide protection for a telecommunications module which will usually have a strip-like configuration and comprise a number of connection contacts. In such a case, the protection plug could be called a protection magazine. However, the protection plug can also include only two or four tapping contacts and a single grounding contact. In the case of two tapping contacts, at least over voltage protection will be possible. In the case of four tapping contacts, over current protection will also be enabled. The single grounding contact would be sufficient in order to provide the necessary ground connection. The grounding contact can lie in one and the same plane with two of the two or four tapping contacts, which are present.

As mentioned, the protection plug of the assembly can have plural tapping contacts and constitute a protection magazine. In particular, the protection plug can have a number of tapping contacts, which corresponds to the number of contacts of the module itself.

As indicated above, the inventive assembly can be configured so as to provide a telecommunications module with a number of contacts, which are intended to remain free from wires connected thereto. These contacts will merely serve as shielding contacts between two contacts, to which wires are connected. Such a shield reduces or avoids crosstalk. In this connection, these shielding contacts of the telecommunications module can simultaneously serve as grounding contacts for providing the necessary ground connection with the protection components. Thus, the protection components which are accommodated in the telecommunications module and/or the protection components of the protection plug, can be connected with the shielding /grounding contact of the telecommunications module, in the case of the protection plug usually via at least one grounding contact. In this case, the contacts of the telecommunications module will alternatingly be used as connection contact (a, b) and as an earth contact(s), which will additionally provide shielding functions. However, such a shielding contact can also be used to connect a wire therewith. Furthermore, certain contacts of the telecommunications module, which may or may not be tapped by contacts of the protection plug, can serve other purposes, such as providing a power supply to the module and/or act as an access for testing and monitoring.

### Brief Description of the Drawings

In the following, an embodiment of the invention will be described in greater detail by means of reference to the enclosed drawings, in which
Fig. 1 shows an exploded perspective view of a protection plug of the inventive assembly;
Fig. 2 shows a perspective view of the protection plug of Fig. 1;
Fig. 3 shows the assembly in a perspective and partially cut view; and
Fig. 4 shows a second embodiment of the assembly in a perspective and partially cut view.

### Description of Preferred Embodiments of the Invention

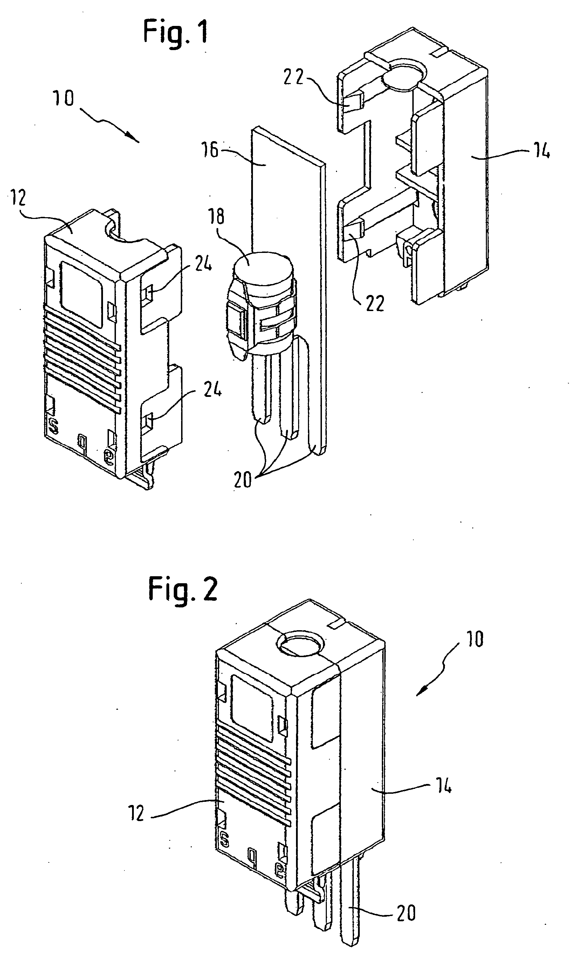

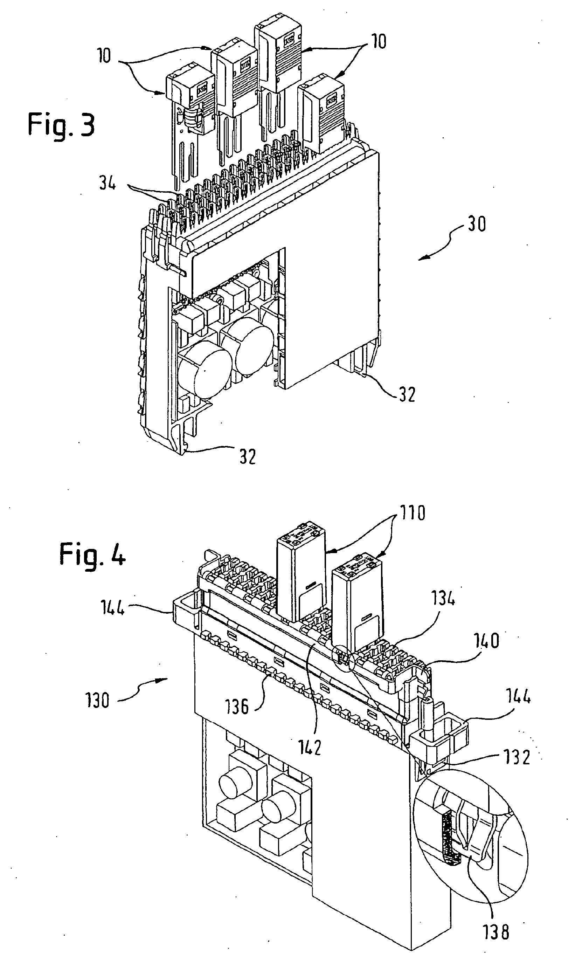

Fig. 1 shows the protection plug 10, which is essentially constituted by a front housing member 12, a rear housing member 14 and printed circuit board 16, which in the depicted case, carries a surge arrester 18. The printed circuit board is configured so as to include three fingers or legs 20, which carry contacts. Conductors, which are as such not visible in Fig. 1, are printed on the legs 20 so as to provide the necessary electrical connections between the tapping contacts as well as the grounding contact and the surge arrester. In this context, it should be mentioned that an electronic fuse can be arranged between the grounding contact of the surge arrester and the grounding contact of the printed circuit board, which is eventually connected with ground. In the depicted case, the right and center leg are used as tapping contacts, whereas the left leg is used as a grounding contact. However, in certain applications, also the right or center leg can be used as the grounding contact. Furthermore, the grounding contact can also be located in a plain, which is not coplanar with the tapping contacts. This is shown in Fig. 4. The necessary electrical connection to and from the surge arrester will immediately be evident for the skilled person. Correspondingly, it will be readily understood by the skilled person that any other type of protection components are conceivable. According to a preferred embodiment, which renders the manufacture of the protection plug comparably simple, the printed conductors will be formed on one and the same side of the printed circuit board 16, e.g. that side, which is opposite the search arrester 18, in order to facilitate the connection work for connecting the search arrester 18 with the conductors. In this manner, all contacts of the protection plug are located in one and the same plane.

The protection plug shown in Fig. 1 is assembled by mounting the search arrester 18 to the printed circuit board 16 and subsequently fitting the printed circuit board 16 into the rear-housing element 14. In order to complete the protection plug, the front housing member 12 is fitted to the rear housing member 14 and is subsequently retained by the engagement of one or more latching hooks 22 formed on the rear housing member 14 and suitable openings or recesses 24 in the front housing member 12.

In Fig. 2, the final configuration of the box-like protection plug 10 is shown which is obtained by the above-described assembly of the components, which constitute the protection plug.

In Fig. 3, a perspective view of an assembly of a telecommunications module 30 and in the depicted case four protection plugs 10 is shown. As can be taken from the figure, the telecommunications module 30 in this case comprises a housing having means 32 in the form of latch hooks for attaching the telecommunications module to a carrier, e.g. a telecommunications rack mount. Furthermore, in the case shown, wire-guiding troughs are formed in the housing of the telecommunications module on the upper and lower face thereof (the front and back face in Fig. 3). The telecommunications module comprises, in its interior, a printed circuit board, having various electrical components, inter alia protection components. Contacts 34 are exposed at the front side of the housing so as to allow the connection of wires. In the embodiment shown, protection plugs 10 can be inserted from the front side. These protection plugs comprise additional protection components. The protection plugs 10 shown in Fig. 3 are similar to the protection plugs shown in Fig. 1 and 2. The protection plugs 10 comprise further protection components in order to complete the protection provided by those protection components which are provided in the telecommunications module 30 itself. As regards the accommodation of particular types of protection components in the module and/or the protection plugs, reference is made to the previous explanations.

Fig. 4 shows a further embodiment of the assembly of a telecommunications module 130 and, in this case, two protection plugs 110. Firstly, the telecommunications module 130 as such is different from that shown in Fig. 3, among others, by the fact that latch hooks 132 are formed in a part of the telecommunications module 130, which is located farther to the front. Furthermore, wire guides are provided in the form of hooks 136, which extend in two sideways' directions. Generally a mushroom-like shape is obtained. As regards the interior of the telecommunications module, which is visible in Fig. 4 through the cut-out, the telecommunications module 130 contains a printed circuit board, on which splitter circuits are formed.

The protection plug 110 differs from the protection plug 10 shown in Fig. 3 in that the grounding contact 138, which is shown in greater detail in the right part of Fig. 4, is not coplanar with the tapping contacts. The tapping contacts (not visible) are provided in the vicinity of the contacts 134 of the telecommunications module 130. In the telecommunications module, a grounding rail 140 is provided offset with regard to the contacts 134. The grounding rail 140 is adapted to establish electrical contact with a carrier in the field of telecommunications (not shown), which is made of metal. Thus, any current, which is induced in the grounding rail 140, can be diverted to ground. A straight section 142 of the grounding rail 140 runs along the rows of contacts 134. As shown in the right part of Fig. 4, the grounding contact 138 of the protection plug 110 is in electrical contact with the grounding rail 140 so as to establish the necessary electrical connections. Finally, it should be noted that the telecommunications module 130 has, at the sides thereof, wire guides 144, into which wires, which are connected to the contacts 134, can be inserted in order to guide these outside the module 130.

## Claims

1. An assembly of a telecommunications module (30) and at least one protection plug (10) containing at least one protection component (18) wherein also the module (30) itself contains at least one protection component, **characterized in that** the telecommunications module (30) contains at least one reversible protection component

2. The assembly in accordance with claim 1, wherein the plug (10) contains at least one irreversible protection component.

3. The assembly in accordance with claim 1 or claim 2, **characterized in that** the protection plug (10) contains a protection component (18), which needs to be replaced after it has been activated.

4. The assembly in accordance with claim 2 or 3, **characterized in that** the telecommunications module (30) contains an over current protector, and/or the protection plug contains at least one over voltage protection component (18).

5. The assembly in accordance with one of claims 2 to 4, **characterized in that** the telecommunications module (30) and/or protection plug (10) contain a printed circuit board (16) carrying the protection components.

6. The assembly in accordance with one of the preceding claims, **characterized in that** the telecommunications module (30) further contains at least one circuit for splitting a telecommunications signal.

7. The assembly in accordance with one of the preceding claims, **characterized in that** the telecommunications module (30) contains at least one connection point and/or at least one circuit for testing and monitoring purposes.

8. The assembly in accordance with one of the preceding claims, **characterized in that** the protection plug (10) has strip-like tapping contacts and at least one strip-like grounding contact lying in one plane with at least some of the tapping contacts.

9. The assembly in accordance with one of the preceding claims, **characterized in that** the protection plug is formed as a protection magazine comprising tapping contacts in a number corresponding to the number of contacts of the telecommunications module (30).

10. The assembly in accordance with one of the preceding claims, **characterized in that** the telecommunications module (30) comprises contacts which are intended to remain free from the connection of wires and act as shielding and/or grounding contacts.

## Patentansprüche

1. Anordnung aus einem Telekommunikationsmodul (30) und mindestens einem Schutzstecker (10), enthaltend mindestens eine Schutzkomponente (18), wobei auch das Modul (30) selbst mindestens eine Schutzkomponente enthält, **dadurch gekennzeichnet, dass** das Telekommunikationsmodul (30) mindestens eine reversible Schutzkomponente enthält.

2. Anordnung nach Anspruch 1, wobei der Stecker (10) mindestens eine irreversible Schutzkomponente enthält.

3. Anordnung nach Anspruch 1 oder 2, **dadurch gekennzeichnet, dass** der Schutzstecker (10) eine Schutzkomponente (18) enthält, die nach Aktivierung ersetzt werden muss.

4. Anordnung nach Anspruch 2 oder 3, **dadurch gekennzeichnet, dass** das Telekommunikationsmodul (30) einen Überstromschutz enthält und/oder der Schutzstecker mindestens eine Überspannungsschutzkomponente (18) enthält.

5. Anordnung nach einem der Ansprüche 2 bis 4, **dadurch gekennzeichnet, dass** das Telekommunikationsmodul (30) und/oder der Schutzstecker (10) eine die Schutzkomponenten tragende Leiterplatte (16) enthalten.

6. Anordnung nach einem der vorhergehenden Ansprüche, **dadurch gekennzeichnet, dass** das Telekommunikationsmodul (30) ferner mindestens eine Schaltung zum Teilen eines Telekommunikationssignal enthält.

7. Anordnung nach einem der vorhergehenden Ansprüche, **dadurch gekennzeichnet, dass** das Telekommunikationsmodul (30) mindestens eine Anschlussstelle und/oder mindestens eine Schaltung für Test- und Überwachungszwecke enthält.

8. Anordnung nach einem der vorhergehenden Ansprüche, **dadurch gekennzeichnet, dass** der Schutzstecker (10) streifenartige Abgreifkontakte und mindestens einen streifenartigen Erdungskontakt, der mit mindestens einigen der Abgreifkontakte in einer Ebene liegt, aufweist.

9. Anordnung nach einem der vorhergehenden Ansprüche, **dadurch gekennzeichnet, dass** der Schutzstecker als ein Schutzmagazin ausgebildet ist, das eine der Anzahl von Kontakten des Telekommunikationsmoduls (30) entsprechende Anzahl von Abgreifkontakten umfasst.

10. Anordnung nach einem der vorhergehenden Ansprüche, **dadurch gekennzeichnet, dass** das Telekommunikationsmodul (30) Kontakte umfasst, die von dem Anschluss von Drähten frei bleiben sollen und als Abschirmungs-und/oder Erdungskontakte fungieren.

## Revendications

1. Ensemble constitué par un module de télécommunications (30) et au moins une fiche de protection (10) contenant au moins un composant de protection (18), le module (30) lui-même contenant aussi au moins un composant de protection, **caractérisé en ce que** ce module de télécommunications (30) contient au moins un composant de protection réversible.

2. Ensemble selon la revendication 1, dans lequel la fiche (10) contient au moins un composant de protection irréversible.

3. Ensemble selon la revendication 1 ou la revendication 2, **caractérisé en ce que** la fiche de protection (10) contient un composant de protection (18), qui a besoin d'être remplacé après avoir été activé.

4. Ensemble selon la revendication 2 ou 3, **caractérisé en ce que** le module de télécommunications (30) contient un protecteur de surintensité, et/ou la fiche de protection contient au moins un composant de protection contre les surtensions (18).

5. Ensemble selon l'une quelconque des revendications 2 à 4, **caractérisé en ce que** le module de télécommunications (30) et/ou la fiche de protection (10) contiennent une carte de circuit imprimé (16) portant les composants de protection.

6. Ensemble selon l'une quelconque des revendications précédentes, **caractérisé en ce que** le module de télécommunications (30) contient en outre au moins un circuit pour diviser un signal de télécommunications.

7. Ensemble selon l'une quelconque des revendications précédentes, **caractérisé en ce que** le module de télécommunications (30) contient au moins un point de connexion et/ou au moins un circuit pour des besoins d'essai et de surveillance.

8. Ensemble selon l'une quelconque des revendications précédentes, **caractérisé en ce que** la fiche de protection (10) a des contacts de branchement en forme de barrette et au moins un contact de mise à la terre en forme de barrette situé dans le même plan qu'au moins quelques-uns des contacts de branchement.

9. Ensemble selon l'une quelconque des revendications précédentes, **caractérisé en ce que** la fiche de protection est formée comme un magasin de protection comprenant des contacts de branchement dans un nombre correspondant au nombre de contacts du module de télécommunications (30).

10. Ensemble selon l'une quelconque des revendications précédentes, **caractérisé en ce que** le module de télécommunications (30) comprend des contacts qui sont destinés à rester libres de la connexion de fils et à servir de contacts de blindage et/ou de mise à la terre.
